# EUROPEAN PATENT SPECIFICATION

(11) **EP 2 360 212 B1**
(45) Date of publication and mention of the grant of the patent: **01.01.2014**
(21) Application number: 11154617.2
(22) Date of filing: 16.02.2011
(51) Int. Cl.: C09C 1/00, C09C 3/10, C09C 3/12

(54) **Method for producing glitter**
Verfahren zur Herstellung von Glitter
Procédé de production de paillettes

(30) Priority: 16.02.2010 DE 102010001971
(43) Date of publication of application: 24.08.2011
(73) Proprietor: Sigmund Lindner GmbH, 95485 Warmensteinach (DE)
(72) Inventor: Pilz, Manuela, 96450 Coburg (DE); Schubert, Gudrun, 95488 Eckersdorf (DE)
(74) Representative: Isarpatent

(56) References cited:
- EP-A1- 0 106 235
- EP-A2- 0 678 561
- EP-A2- 0 708 155
- DE-A1-102005 032 346

## Description

The invention relates to a method for producing glitter.

Glitters have many uses for producing a sparkling surface effect and are used inter alia and in particular in cosmetic articles. In order to produce such glitters, there are used foils or films of plastics material which are cut by means of a cutting operation into individual, comparably small particles. If these foils are coated which are produced during the cutting operation, cut edges can become physically and/or chemically weakened. When used, for example, in cosmetic products, the components found in cosmetics, such as water or solvents, can reach the glitter via the cut edges and impair the resistance thereof.

EP 0 708 155 A2 discloses a process for manufacturing solid particles coated with silicon dioxide by decomposition of volatile silicon compounds with water vapour and/or oxygen in the presence of the moved solid particles, wherein silanes with at least one alkanoyloxy residue are used as silicon compounds.

Metal pigments twice passivated in a gaseous phase are described in EP 0 678 561 A2 which are available by vapour phase decomposition of volatile phosphorus compounds and of volatile nitrogen-containing silicon compounds with water vapour and/or oxygen in the presence of the moved solid particles, as well as their manufacturing.

An object of the invention is therefore to provide a method for producing glitter and glitters which are physically and/or chemically resistant after their production so that they can be used, for example in cosmetics, without impairing the surface effects.

This object is achieved according to the invention by the features set out in claim 1 and claim 11.

The dependent claims relate to other configurations of the method according to the invention and of the glitter.

The invention provides a method and a glitter in which the cut edges are protected against physical or chemical weakening when such glitters are used in suspensions or solutions, for example, paints, cosmetics, etc. In particular, the surface effects and the colour components present are intended not to be subject to any impairment such as, for example, colour change, even when used in suspensions, solutions such as paints, cosmetics or polymers.

According to the invention, the glitters are produced using a so-called fluidised bed process in which in principle, in order to coat particles, the individual particles are coated with a suspension or dispersion. In the fluidised bed process, which is known per se, granulates or particles are fluidised by a flow of air, the flow of air constituting a primary flow and the layer of protective material which is provided for the particles being introduced by means of a secondary flow so that the layer of protective material which is in the form of a suspension or dispersion covers the individual particles completely over the entire outer face. Fluidised bed processes and devices for carrying out fluidised bed processes are known, for example, from the publication Operating Guide "Mini Glatt mit Microkit" ("Mini Glatt with Micro kit"), October 2003, and from US 3,241,520 and US 5,632,102.

According to a first aspect, the present invention is directed to a method for producing glitter comprising particles having a thickness of ≥ 1 µm from a predetermined starting material, which particles are introduced into a mixed bed which is produced by means of a fluidised bed, the mixed bed being adjusted by means of a primary flow and a secondary flow, and the individual particles in the mixed bed being sealed on all sides with a layer of protective material so as to enclose cut and broken edges, characterised in that the mixed bed is produced by means of a process air flow which is heated to from 50 °C to 80 °C, preferably approximately 60 °C.

In an embodiment, as a starting material, there is used a carrier layer of plastics foil which is provided on either side with a coating of aluminium and thereon with a coating of polyurethane or epoxide, or a carrier layer of a plastics foil with a coating of polyurethane or epoxide on either side, or a carrier layer of a plastics foil with a coating of aluminium on either side, or a carrier particle of glass or silicate material, or a carrier layer of aluminium foil with a coating of polyurethane or epoxide on either side. Should the carrier particle be of glass or silicate material then, preferably, it is provided with a metal coating.

As preferred metals for the metal coating, silver, aluminium and/or gold may be used.

Preferably, the particles are cut with a preferably hexagon-like shape before the sealing operation with the layer of protective material is carried out in the mixed bed.

In a further embodiment, a hybrid paint or an aqueous polyurethane solution is introduced into the mixed bed as a layer of protective material.

According to the invention, the particles treated in the mixed bed have a diagonal length of 50 µm. Alternatively, the particles may have a diagonal length of 61-500 µm, preferably 61-150 µm.

The mixed bed is produced by means of a process air flow which is heated to from 50 °C to 80 °C, preferably approximately 60 °C.

In a preferred embodiment, the layer of protective material is transparent and/or is provided with a colour component or with colouring pigments. Furthermore, the particles which are coated with a layer of protective material are preferably annealed over a predetermined period of time at from 100 °C to 140 °C, preferably 120 °C. This annealing operation preferably takes place over from 20 to 40 minutes, preferably 30 minutes.

In a second aspect, a glitter is disclosed comprising a carrier layer of plastics foil which is provided on either side with a coating of aluminium and thereon with a coating of polyurethane or epoxide, or a carrier layer of a plastics foil with a coating of polyurethane or epoxide on either side, or a carrier layer of a plastics foil with a coating of aluminium on either side, or a carrier particle of glass or silicate material, or a carrier layer of aluminium foil with a coating of polyurethane or epoxide on either side, which is provided on all sides with a protective layer so as to enclose cut or broken edges (15a, 15b), or a glitter obtainable by the method as described hereinabove.

The carrier layer preferably is provided on either side with a layer (2a, 2b, 3a, 3b) of aluminium or polyurethane or epoxide, wherein the layer thickness preferably is ≥ 1µm.

As described above, the carrier particle of glass or silicate material may be provided with a metal coating in a further embodiment.

The invention is explained in greater detail below with reference to a preferred embodiment. The Figs. are sectional views through glitters constructed in accordance with the invention, in which:
Figs. 1 to 3 are sectional views of a glitter with a different coating construction, a plastics foil being provided as a carrier layer,
Figs. 4 and 5 are sectional views of a glitter with carrier layers of glass or aluminium foil.

The method according to the invention for producing glitter is intended to produce a homogeneous coating of glitter particles on all sides, with a size of from 1 µm to 500 µm. Such particles which form the glitters comprise according to a first preferred embodiment a transparent foil, in particular a plastics foil, which is provided with a coating on either side, preferably of polyurethane or epoxide or aluminium. A coating of aluminium is preferably vapour deposited under vacuum in this instance. If an aluminium layer is applied to both sides of a transparent foil, in particular a plastics foil, according to another embodiment this is preferably covered in each case with a layer of polyurethane or epoxide. The particles which form glitter are produced from an aluminium foil according to another configuration.

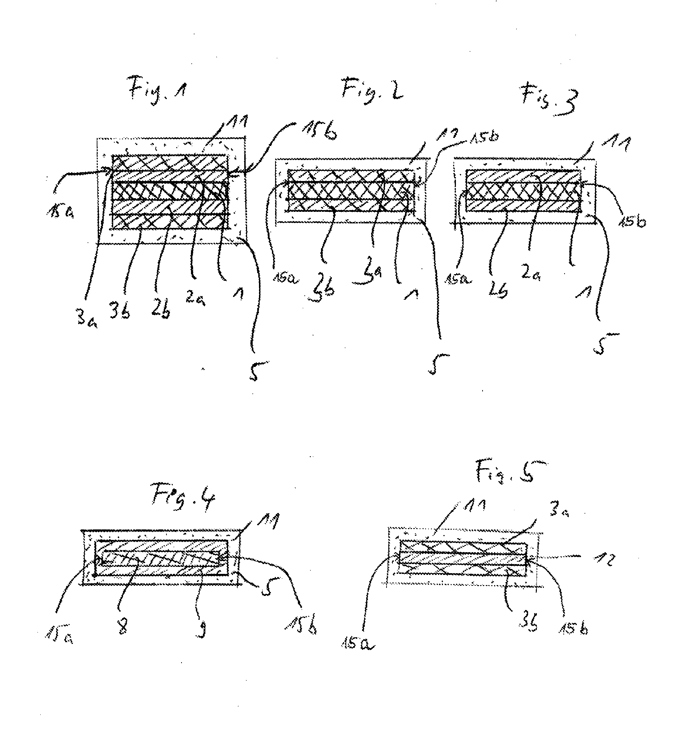

Figs. 1 to 3 illustrate the variants described above for forming the particles. The plastics foil which may be coloured or uncoloured is designated 1. On either side of the plastics film 1 according to Fig. 1 there is an aluminium layer 2a, 2b. On the aluminium layers 2a, 2b there are layers of polyurethane or epoxide.

According to Fig. 2, there is provided a preferably coloured plastics foil 1, on the two surfaces of which there is provided a layer of polyurethane or epoxide designated 3a, 3b, respectively. In the variant according to Fig. 3, the starting point is a plastics foil 1 which is provided on the two surfaces with the layers 2a, 2b of aluminium.

According to another configuration, as illustrated in Fig. 4, particles of glass are used as starting materials, as designated 8 in Fig. 4. A metal layer 9 is applied to this glass particle or this metal layer 9 is omitted.

In the fluidised bed process described below, the particles according to Figs. 1 to 4 are completely provided with a coating, which is designated 11 in each case.

In principle for the particles 8 of glass, it is possible to use irregularly broken fragments of silicate with a thickness ≥ 1µm The provision of metal coatings on these particles is carried out by means of chemical or physical application, for example, vapour deposition.

If the particles comprise a carrier layer in the form of a plastics foil 1, as explained in connection with Figs. 1 to 3, the particles are cut in a preferably hexagon-like shape.

Finally, as shown in Fig. 5, it is also possible to use an aluminium foil as a carrier layer, which is designated 12 in Fig. 5 and is provided on either side with a layer 3a or 3b of polyurethane or epoxide, or this layer is omitted. Such an aluminium foil 12 is also preferably cut in a hexagon-like shape and then further processed in the manner described below.

Generally, the different initial particles are treated using comparable parameters and are completely surrounded with the layer of protective material in the fluidised bed process so that all the cut edges or broken edges of the initial particles are enclosed. The precise adaptation of the parameters during the fluidised bed process is achieved through the densities and sizes of the respective materials.

In the production of particles from a plastics foil with the coating mentioned above, the individual particles are cut from the foil, preferably in a hexagonal shape, so that cut edges are produced which are formed especially at the side of the foil. Whilst the carrier layer is chemically and physically resistant even at the uncoated side thereof, by means of vapour deposition of aluminium and an additional coating of polyurethane or epoxide, the desired optical effect is achieved on the opposite surface by adding colour. Both surfaces are physically and chemically resistant, whilst over the lateral cut edges, owing to weakening caused by solvents, such as water or the like and when used in paints and cosmetics, it is not possible to prevent a deterioration of the appearance. To this end, the glitters are provided, by means of a fluidised bed process, with a protective layer 11 which completely surrounds the glitters in each case.

All of the particles shown in Figs. 1 to 5 and explained above in greater detail are surrounded by means of a fluidised bed unit in the fluidised bed process with the layer 11 as a layer of protective material in such a manner that all the outer faces are completely enclosed.

According to one example, using a WFP-8 unit fluidised bed unit from the company DMR Prozesstechnologie GmbH (Switzerland), five kilograms of glitter particles of polyester of the type 2510-52-3 hex are coated with an organically modified silane solution, that is to say, a clear hybrid paint. The particles of polyester were produced in this instance from a polyester foil which has a thickness of 25 µm and which was aluminised and subsequently coloured red. The particles were cut from this foil, for example, as hexagonal particles with a size of 200 µm, measured over the length of the mutually parallel cut edges. The thickness of the particles is on average 25-35 µm.These particles were swirled in the mentioned unit by means of process air which was preheated to 60 °C with an air throughput of 60m³/h in order to produce a so-called mixed bed to which an organically modified silane solution was supplied by means of bottom spray, that is to say from below.

The primary pressure (process air) and the secondary pressure were adjusted in the ratio 1: 2.5 in order to achieve good wetting of the entire mixed bed and consequently the glitter particles in the mixed bed. In this instance, the droplets of the clear hybrid paint are distributed finely and blown into the fluidised bed in a uniform manner. In this example, 1000 ml of clear hybrid paint is sprayed in within 60 minutes in order to counteract quick drying of the droplets on the particles. After this time has elapsed, it was possible to remove 5 kg of coated glitter from the unit and, by means of a subsequent 30 minute annealing operation at 120 °C, the coating was cross-linked in a stable manner. In this instance, there was a homogeneous coating of all the glitter particles and consequently also a coating in the region of the cut edges which prevents chemical or physical weakening of the glitter.

Depending on the particle size and the particle density of the glitters to be produced, different degrees of fluidisation are to be set in the fluidised bed. Depending on the weight of the glitters, with larger glitter particles a higher process pressure is required, both with respect to the process air which produces the swirling and with respect to the hybrid paint which is blown into the fluidised bed, than with smaller particles which form the glitters. Great expansion of the fluidised bed is required in order to ensure sufficiently great spacing between the individual glitter particles, so that the individual glitter particles, which can be accessed separately, can be coated with the layer of protective material and on the other hand the particles do not become bonded together during the coating operation.

As a coating layer, it is also possible to use an aqueous polyurethane solution instead of a hybrid paint, for example, an organically modified silane solution which is optionally or preferably coloured.

The fluidised bed is produced by means of jets which produce a primary flow, the pressure of this primary flow determining the length of the atomising cone, and by a secondary flow of which the pressure determines the width of the atomising cone.

It has been found that the smaller the solution droplets or the finer the spray mist are to be, the greater the primary pressure should be set. In the case of relatively small particles, the droplets should be as fine as possible. However, smaller droplets dry faster than larger droplets so that, when producing smaller droplets, a larger quantity, for example, of hybrid paint must be used so that the moisture in the fluidised bed is uniform.

As an alternative to jets which are arranged in the base (bottom spray), these jets may also be provided at another location within the unit, for example, in the upper region of the unit or in the lateral region (top spray, tangential spray).

The addition of the layer of protective material in the form of polyurethane solutions or clear or coloured hybrid paints, with preferably organically modified silane solutions is carried out by a time-controlled metering system, for example, a hose pump. The drying or the crosslinking is carried out, depending on the solvent, by the process air being heated or the mixed or fluidised bed being heated. If necessary, the glitters can subsequently be subjected to an additional thermal processing operation, for example in the form of a polymerisation of the protective layer at temperatures higher than 50 °C.

Optionally, an adaptation with respect to the temperatures may be necessary, and also with respect to the parameters with which the fluidised bed process is carried out.

The coating by means of the fluidised bed can optionally be repeated in order to carry out a multiple coating of the glitter particles, in order, for example, to achieve modified chemical or physical properties of the protective layer or to allow different protective properties.

Using the fluidised bed process described above, the multi-layer structure is provided with a protective layer 11, which covers all the surfaces of the glitter particle and consequently also covers in particular the lateral cut edges 15a, 15b in an enclosing manner.

In accordance with requirements, colour components, for example, in the form of colouring pigments, can be introduced either into the protective layer 11 or also beforehand together with the application of the other layers 2a to 3b in order to provide colouring on the relevant surface.

## Claims

1. A method for producing glitter comprising particles having a thickness of ≥ 1 µm from a predetermined starting material, which particles are introduced into a mixed bed which is produced by means of a fluidised bed, the mixed bed being adjusted by means of a primary flow and a secondary flow, and the individual particles in the mixed bed being sealed on all sides with a layer of protective material so as to enclose cut and broken edges, **characterised in that** the mixed bed is produced by means of a process air flow which is heated to from 50 °C to 80 °C, preferably approximately 60 °C.

2. The method according to claim 1, **characterised in that**, as a starting material, there is used a carrier layer of plastics foil which is provided on either side with a coating of aluminium and thereon with a coating of polyurethane or epoxide, or a carrier layer of a plastics foil with a coating of polyurethane or epoxide on either side, or a carrier layer of a plastics foil with a coating of aluminium on either side, or a carrier particle of glass or silicate material, or a carrier layer of aluminium foil with a coating of polyurethane or epoxide on either side.

3. The method according to claim 2, **characterised in that** the carrier particle of glass or silicate material is provided with a metal coating.

4. The method according to claim 1, **characterised in that** the particles are cut with a preferably hexagon-like shape before the sealing operation with the layer of protective material is carried out in the mixed bed.

5. The method according to at least one of the preceding claims, **characterised in that** a hybrid paint or an aqueous polyurethane solution is introduced into the mixed bed as a layer of protective material.

6. The method according to at least one of the preceding claims, **characterised in that** the particles with a diagonal length of 50 µm are treated in the mixed bed.

7. The method according to at least one of claims 1-5, **characterised in that** particles with a diagonal length of 61-500 µm, preferably 61-150 µm, are treated in the mixed bed

8. The method according to at least one of the preceding claims, **characterised in that** the layer of protective material is transparent and/or is provided with a colour component or with colouring pigments.

9. The method according to at least one of the preceding claims, **characterised in that** the particles which are coated with a layer of protective material are annealed over a predetermined period of time at from 100 °C to 140 °C, preferably 120 °C.

10. The method according to claim 9, **characterised in that** the annealing operation takes place over from 20 to 40 minutes, preferably 30 minutes.

11. A glitter, comprising a carrier layer of plastics foil which is provided on either side with a coating of aluminium and thereon with a coating of polyurethane or epoxide, or a carrier layer of a plastics foil with a coating of polyurethane or epoxide on either side, or a carrier layer of a plastics foil with a coating of aluminium on either side, or a carrier particle of glass or silicate material, or a carrier layer of aluminium foil with a coating of polyurethane or epoxide on either side, which is provided on all sides with a protective layer so as to enclose cut or broken edges (15a, 15b), or obtainable by the method according to one or more of claims 1-10.

12. The glitter according to claim 11, **characterised in that** the carrier layer is provided on either side with a layer (2a, 2b, 3a, 3b) of aluminium or polyurethane or epoxide.

13. The glitter according to claim 11 or claim 12, **characterised in that** the layer thickness is ≥ 1µm.

14. The glitter according to claim 11, **characterised in that** the carrier particle of glass or silicate material is provided with a metal coating.

## Patentansprüche

1. Verfahren zur Herstellung von Glitter umfassend Partikel mit einer Dicke > 1µm aus vorbestimmtem Ausgangsmaterial, die in ein durch eine Wirbelschicht erzeugtes Mischbett eingebracht werden, wobei das Mischbett durch einen Primärstrom und einen Sekundärstrom eingestellt wird, und die in dem Mischbett vorhandenen einzelnen Partikel mit einem Schutzschichtmaterial allseitig unter Einschluss von Schnitt- bzw. Bruchkanten versiegelt werden, **dadurch gekennzeichnet, dass** das Mischbett durch einen auf 50°C bis 80°C, vorzugsweise etwa 60°C erwärmten Prozessluftstrom erzeugt wird.

2. Verfahren nach Anspruch 1, **dadurch gekennzeichnet, dass** als Ausgangsmaterial eine Trägerschicht aus Kunststofffolie, die beidseitig mit einer Beschichtung aus Aluminium sowie darauf mit einer Beschichtung aus Polyurethan oder Epoxid versehen ist, oder eine Trägerschicht aus einer Kunststofffolie mit einer beidseitigen Beschichtung aus Polyurethan oder Epoxid, oder eine Trägerschicht aus einer Kunststofffolie mit einer beidseitigen Beschichtung aus Aluminium, oder ein Trägerpartikel aus Glas- bzw. Silikatmaterial, oder eine Trägerschicht aus Aluminiumfolie mit einer beidseitigen Beschichtung aus Polyurethan oder Epoxid verwendet wird.

3. Verfahren nach Anspruch 2, **dadurch gekennzeichnet, dass** der Trägerpartikel aus Glas- bzw. Silikatmaterial mit einer Metallbeschichtung versehen wird.

4. Verfahren nach Anspruch 1, **dadurch gekennzeichnet, dass** die Partikel mit vorzugsweise hexagonähnlicher Form geschnitten werden, bevor die Versiegelung mit dem Schutzschichtmaterial im Mischbett durchgeführt wird.

5. Verfahren nach wenigstens einem der vorangehenden Ansprüche, **dadurch gekennzeichnet, dass** als Schutzschichtmaterial ein Hybridlack oder eine wässrige Polyurethan-Lösung in das Mischbett eingebracht wird.

6. Verfahren nach wenigstens einem der vorangehenden Ansprüche, **dadurch gekennzeichnet, dass** die Partikel mit einer Diagonallänge von vorzugsweise 50 µm in dem Mischbett behandelt werden.

7. Verfahren nach wenigstens einem der Ansprüche 1 bis 5, **dadurch gekennzeichnet, dass** Partikel mit einer Diagonallänge von 61 bis 500 µm, vorzugsweise 61 bis 150 µm, in dem Mischbett behandelt werden.

8. Verfahren nach wenigstens einem der vorangehenden Ansprüche, **dadurch gekennzeichnet, dass** das Schutzschichtmaterial transparent ist und/oder mit einem Farbanteil bzw. mit Farbpigmenten versehen wird.

9. Verfahren nach wenigstens einem der vorangehenden Ansprüche, **dadurch gekennzeichnet, dass** die mit Schutzschichtmaterial beschichteten Partikel bei 100°C bis 140°C, vorzugsweise 120°C über eine vorbestimmte Zeitspanne getempert werden.

10. Verfahren nach Anspruch 9, **dadurch gekennzeichnet, dass** die Temperung über 20 bis 40 Minuten, vorzugsweise 30 Minuten, stattfindet.

11. Glitter, umfassend eine Trägerschicht aus Kunststofffolie, die beidseitig mit einer Beschichtung aus Aluminium sowie darauf mit einer Beschichtung aus Polyurethan oder Epoxid versehen ist, oder eine Trägerschicht aus einer Kunststofffolie mit einer beidseitigen Beschichtung aus Polyurethan oder Epoxid, oder eine Trägerschicht aus einer Kunststofffolie mit einer beidseitigen Beschichtung aus Aluminium, oder einen Trägerpartikel aus Glas- bzw. Silikatmaterial, oder eine Trägerschicht aus Aluminiumfolie mit einer beidseitigen Beschichtung aus Polyurethan oder Epoxid, welcher allseitig unter Einfassung von Schnitt- oder Bruchkanten (15a, 15b) mit einer Schutzschicht versehen ist, oder erhältlich gemäß dem Verfahren nach einem oder mehreren der Ansprüche 1 bis 10.

12. Glitter nach Anspruch 11, **dadurch gekennzeichnet, dass** die Trägerschicht beidseitig mit einer Schicht (2a, 2b, 3a, 3b) aus Aluminium oder Polyurethan oder Epoxid versehen ist.

13. Glitter nach Anspruch 11 oder 12, **dadurch gekennzeichnet, dass** die Schichtdicke ≥ 1 µm ist.

14. Glitter nach Anspruch 11, **dadurch gekennzeichnet, dass** der Trägerpartikel aus Glas- bzw. Silikatmaterial mit einer Metallbeschichtung versehen ist.

## Revendications

1. Procédé de production de paillettes comprenant des particules ayant une épaisseur ≥ 1 µm à partir d'un matériau de départ prédéterminé, lesquelles particules sont introduites dans un lit mixte qui est produit au moyen d'un lit fluidisé, le lit mixte étant réglé au moyen d'un flux primaire et d'un flux secondaire, et les particules individuelles dans le lit mixte étant scellées sur toutes les faces avec une couche de matériau protecteur de manière à englober des bords coupés et cassés, **caractérisé par le fait que** le lit mixte est produit au moyen d'un écoulement d'air de process qui est chauffé à une température allant de 50 °C à 80 °C, préférentiellement approximativement 60 °C.

2. Procédé selon la revendication 1, **caractérisé par le fait qu'**on utilise comme matériau de départ une couche de support de film de matière plastique qui est pourvue sur chaque face d'un revêtement aluminium et recouverte d'un revêtement polyuréthane ou époxyde, ou une couche de support de film de matière plastique avec un revêtement polyuréthane ou époxyde sur chaque face, ou une couche de support de film de matière plastique avec un revêtement aluminium sur chaque face, ou une particule de support de matériau de verre ou de silicate, ou une couche de support de film d'aluminium avec un revêtement polyuréthane ou époxyde sur chaque face.

3. Procédé selon la revendication 2, **caractérisé par le fait que** la particule de support de matériau de verre ou de silicate est pourvue d'un revêtement métal.

4. Procédé selon la revendication 1, **caractérisé par le fait que** les particules sont coupées en une forme préférentiellement hexagonale avant que l'opération de scellement avec la couche de matériau protecteur soit exécutée dans le lit mixte.

5. Procédé selon au moins l'une des revendications précédentes, **caractérisé par le fait qu'**une peinture hybride ou une solution aqueuse polyuréthane est introduite dans le lit mixte en tant que couche de matériau protecteur.

6. Procédé selon au moins l'une des revendications précédentes, **caractérisé par le fait que** les particules avec une longueur diagonale de 50 µm sont traitées dans le lit mixte.

7. Procédé selon au moins l'une des revendications 1 à 5, **caractérisé par le fait que** des particules avec une longueur diagonale de 61 à 500 µm, préférentiellement 61 à 150 µm, sont traitées dans le lit mixte.

8. Procédé selon au moins l'une des revendications précédentes, **caractérisé par le fait que** la couche de matériau protecteur est transparente et/ou est pourvue d'un composant de couleur ou de pigments colorants.

9. Procédé selon au moins l'une des revendications précédentes, **caractérisé par le fait que** les particules qui sont revêtues d'une couche de matériau protecteur sont recuites sur une période de temps prédéterminée à une température allant de 100 °C à 140 °C, préférentiellement 120 °C.

10. Procédé selon la revendication 9, **caractérisé par le fait que** l'opération de recuit a lieu sur une période de 20 à 40 minutes, préférentiellement 30 minutes.

11. Paillette comprenant une couche de support de film de matière plastique qui est pourvue sur chaque face d'un revêtement aluminium et recouverte d'un revêtement polyuréthane ou époxyde, ou une couche de support de film de matière plastique avec un revêtement polyuréthane ou époxyde sur chaque face, ou une couche de support de film de matière plastique avec un revêtement aluminium sur chaque face, ou une particule de support de matériau de verre ou de silicate, ou une couche de support d'un film d'aluminium avec un revêtement polyuréthane ou époxyde sur chaque face, qui est pourvue sur toutes les faces d'une couche protectrice de manière à englober des bords coupés et cassés (15a, 15b), ou pouvant être obtenue par le procédé selon au moins l'une des revendications 1 à 10.

12. Paillette selon la revendication 11, **caractérisée par le fait que** la couche de support est pourvue sur chaque face d'une couche (2a, 2b, 3a, 3b) d'aluminium, de polyuréthane ou d'époxyde.

13. Paillette selon la revendication 11 ou la revendication 12, **caractérisée par le fait que** l'épaisseur de couche est ≥ 1 µm.

14. Paillette selon la revendication 11, **caractérisée par le fait que** la particule de support de matériau de verre ou de silicate est pourvue d'un revêtement métal.
